# EUROPÄISCHE PATENTANMELDUNG

(11) **EP 4 796 912 A1**
(43) Veröffentlichungstag der Anmeldung: **26.08.2026**
(21) Anmeldenummer: 26150491.4
(22) Anmeldetag: 07.01.2026
(51) Int. Cl.: G01N 1/04, G01N 1/12

(54) **PROBEKAPSEL, PROBENEHMER SOWIE PROBEENTNAHMEVERFAHREN**

(30) Priorität: 25.02.2025 DE 102025107017
(71) Anmelder: Bürkle GmbH, 79415 Bad Bellingen (DE)
(72) Erfinder: Breitmoser, Ralf, 79219 Staufen (DE)
(74) Vertreter: Kilian Kilian & Partner mbB

(57) **Zusammenfassung**

Die Erfindung betrifft eine Probekapsel für einen Probenehmer, wobei die Probekapsel eingerichtet ist, eine Probe aufzunehmen, wobei die Probekapsel aufweist einen Probekapselkörper mit einem Probenaufnahmeraum zur Aufnahme der Probe, wobei sich der Probenaufnahmeraum in eine Längsrichtung der Probekapsel und eine Breitenrichtung der Probekapsel erstreckt, und einen Deckel, der mit dem Probekapselkörper derart verbunden ist, dass der Deckel in der Breitenrichtung relativ zu dem Probekapselkörper zum Freigeben und/oder Verschließen des Probeaufnahmeraums bewegbar ist.

Weiterhin bezieht sich die Erfindung auf einen Probenehmer mit einer solchen Probekapsel sowie ein entsprechendes Probeentnahmeverfahren unter Verwendung eines solchen Probenehmers.

## Beschreibung

Die Erfindung betrifft eine Probekapsel für einen Probenehmer, wobei die Probekapsel einen Probekapselkörper aufweist, der eingerichtet ist, eine Probe, insbesondere eine flüssige, pulverförmige oder granulatförmige Probe, aufzunehmen.

Weiterhin bezieht sich die Erfindung auf einen Probenehmer zur Entnahme einer Probe, wobei der Probenehmer ein längliches Probekapselaufnahmeelement aufweist, das eine Probekapselaussparung bzw. einen Probekapselaufnahmeraum zum Einsetzen des Probekapselkörpers einer solchen Probekapsel aufweist.

Darüber hinaus betrifft die Erfindung ein Probeentnahmeverfahren zur Entnahme einer Probe aus einer Probengesamtmenge unter Verwendung eines solchen Probenehmers.

Herkömmlicherweise können zur Entnahme von flüssigen, pulverförmigen bzw. feinkörnigen oder granulatförmigen bzw. grobkörnigen Proben aus einem Probengut bzw. einer Probengesamtmenge unterschiedlichste Probenehmer eingesetzt werden. Je nach Anwendungsfall unterscheiden sich diese in ihrer Gestaltung bzw. Dimensionierung.

Die primäre Funktion einer Probenentnahme besteht häufig darin, dem Probengut bzw. der Probengesamtmenge eine für die Analyse erforderliche repräsentative Probe zu entnehmen, beispielsweise eine Probe kontaminationsfrei zu entnehmen. Anschließend können, z.B. durch eine Analyse im Labor, zuverlässige Aussagen über die Qualität, Beschaffenheit oder Zusammensetzung der Probe und damit Rückschlüsse auf das Probengut gezogen werden.

Herkömmliche Probenehmer zur beispielsweise kontaminationsfreien Entnahme einer Probe sind unter anderem so konstruiert, dass zumindest bei bestimmungsgemäßem Gebrauch des Probenehmers eine berührungslose Probenentnahme, d.h. ohne, dass der Probenehmende mit der Probe in Berührung kommt, gewährleistet ist, um eine Kontamination der Probe zu vermeiden. Eine berührungslose Probenentnahme ist insbesondere auch dann von Bedeutung, wenn die Probe ein für den Menschen oder die Umwelt potenziell gefährliches bzw. gesundheitsschädliches Material umfasst. In diesem Zusammenhang muss die Probe hierbei so entnommen werden können, dass kein Material verschüttet wird oder ausläuft.

In diesem Zusammenhang sind aus dem Stand der Technik Probenehmer in Form sogenannter Probenstecher bekannt. Dabei handelt es sich beispielsweise um einen stabförmigen Probenehmer mit einer Außenhülle (Außenrohr) und einem Probenstab (Innenrohr), wobei bei dem Probenehmer der Probenstab und die Außenhülle konzentrisch angeordnet und gegeneinander verdrehbar sind. Der Probenstab weist dabei Aussparungen bzw. Vertiefungen auf, die bestimmungsgemäß zur Aufnahme der Probe eingerichtet sind, wobei die Außenhülle entsprechende Öffnungen hat, sodass, wenn der Probenstecher in das Probengut bzw. Probengesamtmenge eingeführt ist und Probenstab und Außenhülle in Bezug aufeinander entsprechend verdreht sind, die Probe durch die Öffnungen der Außenhülle in die Aussparungen des Probenstabs gelangen kann. Danach wird der Probenstab (erneut) verdreht, sodass die Außenhülle zum Abschluss bzw. Verschließen der Aussparungen des Probenstabs dient.

Nach der Probenentnahme wird die Probe dem Probenstecher beispielsweise zur Analyse entnommen. Findet die Analyse nicht vor Ort statt, so wird die Probe für den Transport, üblicherweise manuell, in einen Probenbehälter umgefüllt, in welchem sie, während des Transports der Probe zum Ort der Analyse, aufbewahrt wird. Das Umfüllen und Transportieren der Probe ist oftmals nicht ohne weiteres einfach durchzuführen, denn es kann von Relevanz sein, dass die Probe so umgefüllt und transportiert wird, dass die Probe unversehrt am Zielort ankommt und insbesondere kein Probenmaterial verloren geht oder kontaminiert wird; allerdings birgt beispielswiese Bereits der Umfüllvorgang die Gefahr der Kontamination.

Beispielsweise ist aus der EP 3 104 153 B1 ein Probenehmer bekannt, der eine von dem Probenehmer entnehmbare Probekapsel (Probeneinsatz) aufweist, die mit einem Deckel verschließbar ist. Problembehaftet bei diesem Probenehmer ist allerdings, dass die Einsätze nach der Probenahme erst nach Abziehen des Außenrohrs vom Innenrohr mit den Deckeln verschlossen und erst dann von dem Innenrohr entnommen werden können; durch diese aufwändige Handhabung ist eine Kontaminationsgefahr der entnommenen Proben erhöht.

Der Erfindung liegt daher die Aufgabe zugrunde, die herkömmlichen Probekapseln bzw. Probeneinsätze, Probenehmer sowie Probeentnahmeverfahren derart weiterzubilden, dass die Handhabung im Zusammenhang mit der Probenahme und/oder dem Transport und/oder der Reinigung und/oder Probenaufbewahrung erleichtert bzw. vereinfacht wird.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsmäße Probekapsel ist für einen Probenehmer eingerichtet und ist vorzugsweise zum Einsetzen in ein Probekapselaufnahmeelement des Probenehmers ausgebildet, wobei die Probekapsel eingerichtet ist, eine Probe, insbesondere eine flüssige, pulverförmige oder granulatförmige Probe, aufzunehmen. Dabei weist die erfindungsmäße Probekapsel einen Probekapselkörper mit einem Probenaufnahmeraum zur Aufnahme der Probe auf, wobei sich der Probenaufnahmeraum in eine Längsrichtung der Probekapsel und eine Breitenrichtung der Probekapsel erstreckt. Weiterhin weist die erfindungsmäße Probekapsel einen Deckel auf, der mit dem Probekapselkörper derart verbunden ist, dass der Deckel in der Breitenrichtung relativ zu dem Probekapselkörper zum Freigeben und/oder Verschließen des Probeaufnahmeraums bewegbar bzw. bewegbar geführt ist.

Anhand dieser Umsetzung der erfindungsgemäßen Probekapsel kann ein Mechanismus umgesetzt werden, anhand dessen der Probenaufnahmeraum des Probekapselkörpers auf äußerst leicht handhabbare Weise geöffnet und verschlossen werden kann. Beispielsweise kann der Probenaufnahmeraum durch den Deckel mittels Drehung eines länglichen und mit einem Griff (drehfest) verbundenen Probekapselaufnahmeelements in Bezug auf ein das Probekapselaufnahmeelement aufnehmendes Rohrelement (Außenrohr) geöffnet und verschlossen werden, ohne den Probekapselkörper von dem Probenehmer entnehmen oder den Probenehmer demontieren zu müssen. Dadurch wird ein kontaminationsloses beproben ermöglicht.

Die erfindungsmäße Probekapsel kann in vorteilhafter Weise so weitergebildet sein, dass der Deckel mittels einer Führungseinrichtung mit dem Probekapselkörper verbunden ist, wobei die Führungseinrichtung eingerichtet ist, den Deckel in der Breitenrichtung relativ zu dem Probekapselkörper bewegbar zu führen, während eine Bewegung des Deckels in der Längsrichtung relativ zu dem Probekapselkörper unterbunden wird. Dementsprechend lässt sich der Deckel mittels der Führungseinrichtung in Breitenrichtung des Probekapselkörpers bewegen, nicht aber in dessen Längsrichtung. Die Führungseinrichtung ist folglich beispielsweise eine Zwangsführung in Form einer Linearführung, welche die Bewegung des Deckels in der Breitenrichtung zulässt, aber in der Längsrichtung verhindert.

Weiterhin kann die erfindungsmäße Probekapsel derart umgesetzt werden, dass die Führungseinrichtung eingerichtet ist, den Deckel in der Breitenrichtung relativ zu dem Probekapselkörper auf einer Bahnkurve bewegbar oder verschwenkbar bzw. schwenkbar zu führen. In diesem Zusammenhang beschreibt die Bahnkurve bevorzugt zumindest abschnittsweise eine Kreisbahn. Dementsprechend wird der Deckel, gesehen in einer Draufsicht auf die Probekapsel bzw. auf den Probekapselkörper, in Breitenrichtung bewegbar geführt. Perspektivisch betrachtet wird der Deckel in Umfangsrichtung des Probenkapselkörpers aufgrund der Schwenkbewegung geführt.

Ferner kann die erfindungsmäße Probekapsel derart ausgebildet sein, dass der Deckel an dessen dem Probeaufnahmeraum zugewandten Innenseite zumindest einen Vorsprung aufweist und der Probekapselkörper zumindest eine der Innenseite des Deckels zugewandte Aussparung aufweist, wobei der zumindest eine Vorsprung in der zumindest einen Aussparung so gleitend geführt ist, dass der Deckel in Bezug auf den Probekapselkörper in der Breitenrichtung verschwenkbar oder schwenkbar bzw. bewegbar gelagert ist.

Des Weiteren kann die erfindungsmäße Probekapsel so realisiert werden, dass der Deckel durch Relativbewegung zu dem Probekapselkörper über ein vorbestimmtes Ausmaß bzw. über eine vorbestimmte Bahnkurve hinweg von dem Probekapselkörper entkoppelt oder gelöst werden kann. Mit anderen Worten wird der Deckel von dem Probekapselkörper außer Eingriff gebracht und damit gelöst, wenn der Deckel über ein vorbestimmtes Ausmaß hinweg relativ zu dem Probekapselkörper bewegt wird.

Der erfindungsmäße Probenehmer ist zur Entnahme einer Probe, vorzugsweise einer flüssigen, pulverförmigen oder granulatförmigen Probe, eingerichtet, wobei der Probenehmer aufweist: ein längliches Probekapselaufnahmeelement (Innenrohr), das eine Probekapselaussparung zum Einsetzen eines Probekapselkörpers (bzw. eines Einsatzes) der erfindungsgemäßen Probekapsel umfasst, wobei der Probekapselkörper in die Probekapselaussparung unbeweglich eingesetzt ist, wobei das Probekapselaufnahmeelement eingerichtet ist, den Deckel zumindest in Breitenrichtung oder Umfangsrichtung abschnittsweise zu führen, wenn der Probekapselkörper relativ zu dem Deckel über ein vorbestimmtes Ausmaß hinweg in der Breitenrichtung oder Umfangsrichtung bewegt wird. Der Deckel wird somit vorzugsweise bei vollständig verschlossenem Probeaufnahmeraum ausschließlich von der Probekapselkörperseitigen Führungseinrichtung geführt. Wird der Deckel um ein gewisses Ausmaß in Breitenrichtung bewegt, wird dieser auch von der probekapselaufnahmeelementseitigen Führungseinrichtung zumindest abschnittsweise geführt.

Dadurch ergeben sich die im Zusammenhang mit der erfindungsgemäßen Probekapsel erläuterten Eigenschaften und Vorteile auf gleiche oder ähnliche Weise, weshalb zur Vermeidung von Wiederholungen auf die vorstehenden Ausführungen im Zusammenhang mit der erfindungsgemäßen Probekapsel verwiesen wird.

Gleiches gilt sinngemäß auch für die folgenden bevorzugten Ausführungsformen des erfindungsmäßen Probenehmers, weshalb auch diesbezüglich auf die vorstehenden Ausführungen im Zusammenhang mit der erfindungsgemäßen Probekapsel verwiesen wird.

Der erfindungsgemäße Probenehmer kann modular aufgebaut sein und auch in unterschiedlichen Längen realisiert werden. Der Probekapselkörper sowie der Deckel können optional aus High-Density Polyethylen (hochdichtes Polyethylen, HDPE) hergestellt sein, kann optional aber auch aus PTFE (Polytetrafluorethylen) oder sonstigen Werkstoffen hergestellt sein.

Beispielsweise kann der Probenehmer zum Beproben von Pharmapulver oder sonstigem Pulver geeignet sein, wobei das zu beprobende Volumen 0.1 - 2.5ml oder 0.1 -3 ml betragen kann. Selbstverständlich kann das Probekapselaufnahmeelement auch mehrere in Längsrichtung und/oder in Umfangsrichtung versetzt angeordnete Probekapselaussparungen aufweisen, so dass mehrere Probekapselkörper eingesetzt werden können. Dementsprechend ist in diesem Fall das Rohrelement (Außenrohr) mit entsprechenden Öffnungen auszubilden.

Der erfindungsmäße Probenehmer kann in vorteilhafter Weise so ausgebildet sein, dass der Probenehmer weiterhin ein hohlzylindrisches Rohrelement (Außenrohr) mit einer zumindest mit dem Deckel korrespondierenden Öffnung aufweist, wobei das Rohrelement das Probekapselaufnahmeelement in dessen zylindrischem Hohlraum aufnimmt und der Deckel und die Öffnung derart fluchten, dass bei Verdrehung des Probekapselaufnahmeelements innerhalb des Rohrelements der Probekapselkörper relativ zu dem Deckel bewegt wird, um den Probenaufnahmeraum des Probekapselkörpers über die Öffnung freizugeben und/oder zu verschließen. Der Probeaufnahmeraum wird somit anhand der Drehung des Probekapselkörpers zu einem Abschnitt der Öffnung bewegt, an dem der Probeaufnahmeraum freigelegt bzw. über den der Probeaufnahmeraum über die Öffnung mit einer Probe befüllbar ist.

Weiterhin kann der erfindungsmäße Probenehmer so ausgestaltet werden, dass die Öffnung einen ersten Öffnungsabschnitt, der mit dem Deckel korrespondiert, und einen in Breitenrichtung daran angrenzenden zweiten Öffnungsabschnitt, der mit dem Probenaufnahmeraum der Probekapselkörpers zumindest teilweise korrespondiert, aufweist. Wie bereits erwähnt wird der Probeaufnahmeraum anhand der Drehung des Probekapselkörpers von dem ersten Öffnungsabschnitt, bei dem der Probeaufnahmeraum anhand des Deckels verschlossen ist, zu dem zweiten Öffnungsabschnitt bewegt, an dem der Probeaufnahmeraum freigelegt bzw. über den zweiten Öffnungsabschnitt mit einer Probe befüllbar ist. Der Deckel ist in den ersten Öffnungsabschnitt eingepasst und daher unbeweglich bzw. festgelegt.

Darüber hinaus kann der erfindungsmäße Probenehmer derart verwirklicht werden, dass das Probekapselaufnahmeelement und das Rohrelement derart relativ zueinander bewegt werden können, dass in einer ersten Stellung der Deckel den Probenaufnahmeraum des Probekapselkörpers verschließt, während vorzugsweise ein Verschlussabschnitt des Probekapselaufnahmeelements den zweiten Öffnungsabschnitt verschließt, und/oder in einer zweiten Stellung der Probenaufnahmeraum des Probekapselkörpers über den zweiten Öffnungsabschnitt freigegeben ist, während der Deckel in dem ersten Öffnungsabschnitt gehalten wird und diesen verschließt, und/oder in einer dritten Stellung der Deckel von dem Probekapselaufnahmeelement außer Eingriff gebracht ist, so dass der Probekapselkörper zusammen mit dem Deckel über den ersten Öffnungsabschnitt von dem Probenehmer entnehmbar sind.

Das erfindungsmäße Probeentnahmeverfahren ist zur Entnahme einer Probe, insbesondere einer flüssigen, pulverförmigen oder granulatförmigen Probe, aus einer Probengesamtmenge unter Verwendung des erfindungsgemäßen Probenehmers vorgesehen, wobei das Verfahren die folgenden Schritte aufweist:
Einführen des Probenehmers in die Probengesamtmenge bei durch den Deckel geschlossenen Probeaufnahmeraum des in dem Probekapselaufnahmeelement eingesetzten Probekapselkörpers;
relatives Drehen des Probekapselaufnahmeelements gegenüber dem Rohrelement derart, dass der Probenaufnahmeraum des Probekapselkörpers über den zweiten Öffnungsabschnitt freigegeben ist, während der Deckel in dem ersten Öffnungsabschnitt gehalten wird und diesen verschließt,
Entnahme der Probe;
relatives Drehen des Probekapselaufnahmeelements gegenüber dem Rohrelement derart, dass der Probenaufnahmeraum durch den Deckel in dem ersten Öffnungsabschnitt wieder verschlossen ist und Herausführen des Probenehmers aus der Probengesamtmenge;
relatives Drehen des Probekapselaufnahmeelements gegenüber dem Rohrelement derart, dass der Deckel von dem Probekapselaufnahmeelement außer Eingriff gebracht wird und Entnahme des Probekapselkörpers zusammen mit dem Deckel über den ersten Öffnungsabschnitt von dem Probenehmer.

Dadurch ergeben sich die im Zusammenhang mit der erfindungsgemäßen Probekapsel erläuterten Eigenschaften und Vorteile auf gleiche oder ähnliche Weise, weshalb zur Vermeidung von Wiederholungen auf die vorstehenden Ausführungen im Zusammenhang mit der erfindungsgemäßen Probekapsel verwiesen wird.

Eine bevorzugte Ausführungsform der Erfindung wird nachfolgend anhand der Figuren beispielhaft erläutert.

Es zeigen:
- Fig. 1: eine schematische Darstellung einer erfindungsgemäßen Probekapsel in einer perspektivischen Ansicht;
- Fig. 2: eine schematische Darstellung eines erfindungsgemäßen Probenehmers mit eingesetzter erfindungsgemäßer Probekapsel von Fig. 1 in einer Schnittdarstellung;
- Fig. 3a-c: schematische Darstellungen des erfindungsgemäßen Probenehmers in unterschiedlichen Stellungen in jeweiligen perspektivischen Ansichten;
- Fig. 4: eine schematische Darstellung des erfindungsgemäßen Probenehmers beispielhaft beim Übergang von einer Stellung in eine andere Stellung.

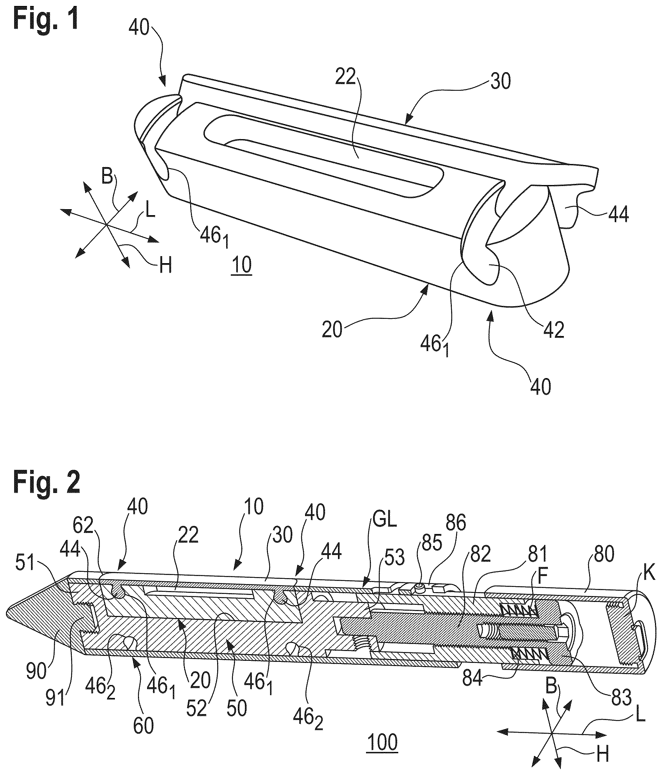

Fig. 1 zeigt eine schematische Darstellung einer erfindungsgemäßen Probekapsel 10, auch als sog. Einsatz oder Probeneinsatz bezeichnet, in einer perspektivischen Ansicht, welche in einen nachstehend noch näher beschriebenen erfindungsgemäßen Probenehmer 100, insbesondere in ein Probekapselaufnahmeelement 50 des Probenehmers 100, eingesetzt werden kann.

Die Probekapsel 10 ist eingerichtet, eine Probe wie beispielsweise eine flüssige, pulverförmige oder granulatförmige Probe aufzunehmen. Zu diesem Zweck weist die Probekapsel 10 einen Probekapselkörper 20, auch als Probeneinsatzkörper, kurz Probeneinsatz bezeichnet, auf, welcher einen Probenaufnahmeraum 22 zur Aufnahme der Probe umfasst. Der Probekapselkörper 20 hat nahezu die Form eines Quaders, wobei die in Längsrichtung L weisenden Endabschnitte dieses Quaders abgerundet sind, wie Fig. 1 entnommen werden kann. Weiterhin ist auch die Oberseite des Probekapselkörpers 20 in einem bestimmten Radius gekrümmt, um bei Einsatz in dem Probenehmer 100 zusammen mit einem nachstehend noch beschriebenen Deckel 30 bündig mit einem Rohrelement 60 des Probenehmers 100 abzuschließen und den Deckel 30 verschwenken bzw. schwenken zu können.

Wie in Fig. 1 erkennbar ist, ist der Probenaufnahmeraum 22 in Form einer länglichen Nut in dem Probekapselkörper 20 ausgebildet, wobei sich der Probenaufnahmeraum 22 in Form der länglichen Nut in eine Längsrichtung L der Probekapsel 10 (bzw. des Probekapselkörpers 20) und eine Breitenrichtung B der Probekapsel 10 erstreckt. Zudem erstreckt sich die Nut in eine Höhenrichtung H der Probekapsel 10 mit einer bestimmten Nuttiefe. Dadurch wird das maximale Volumen einer in dem Probenaufnahmeraum 22 aufzunehmenden Probe festgelegt.

Weiterhin weist die Probekapsel 10 den vorgenannten Deckel 30 auf, der mit dem Probekapselkörper 20 derart verbunden ist, dass der Deckel 30 in der Breitenrichtung B relativ zu dem Probekapselkörper 20 zum Freigeben und Verschließen des Probeaufnahmeraums 22 bewegbar ist. Insbesondere ist der Deckel 30 mittels einer Führungseinrichtung 40 mit dem Probekapselkörper 20 verbunden, welche eingerichtet ist, den Deckel 30 in der Breitenrichtung B relativ zu dem Probekapselkörper 20 bewegbar zu führen, während eine Bewegung des Deckels 30 in der Längsrichtung L relativ zu dem Probekapselkörper 20 unterbunden wird. Der Deckel 30 hat somit einen Freiheitsgrad in Breitenrichtung B, während der Deckel 30 in Längsrichtung L festgelegt bzw. unbeweglich ist.

Zum einen wird die Führungseinrichtung 40 durch an dem Deckel 30, an dessen dem Probeaufnahmeraum 22 zugewandten Innenseite ausgebildeten Vorsprünge 44 gebildet, welche an einem jeweiligen Ende des Deckels 30 bezogen auf die Längsrichtung L an dessen Innenseite hervorstehen und sich in Breitenrichtung B erstrecken.

Zum anderen wird die (probekapselkörperseitige) Führungseinrichtung 40 durch in dem Probekapselkörper 20, der Innenseite des Deckels 30 zugewandte bzw. offene Aussparungen 46₁ gebildet, welche korrespondierend zu den jeweiligen Vorsprüngen 44 in Längsrichtung L des Probekapselkörpers 20 an dessen Endabschnitten angeordnet sind und in Breitenrichtung B verlaufen.

Die jeweiligen Vorsprünge 44 greifen in die jeweiligen Aussparungen 46₁ ein und sind gleitend geführt, so dass der Deckel 30 in Bezug auf den Probekapselkörper 20 in der Breitenrichtung B verschwenkbar bzw. schwenkbar gelagert ist.

Die Verschwenkbarkeit bzw. Schwenkbarkeit des Deckels 30 bzw. die Drehbewegungsmöglichkeit des Deckels 30 ergibt sich dabei insbesondere dadurch, dass die Aussparungen 46₁ der Führungseinrichtung 40 in Breitenrichtung B so geformt sind, dass diese den Deckel 30 in der Breitenrichtung B relativ zu dem Probekapselkörper 20 auf einer Bahnkurve 42 führen. Vorzugsweise beschreibt die Bahnkurve 42 dabei zumindest abschnittsweise eine Kreisbahn bzw. eine ringsegmentförmige Kurve in einem bestimmten Radius. In einer Draufsicht (in Richtung der Höhenachse H blickend) auf den Probekapselkörper 20 ist der Deckel somit in Breitenrichtung B relativ zu dem Probekapselkörper 20 bewegbar geführt. Räumlich bzw. perspektivisch gesehen ist der Deckel 30 aufgrund der kreisbahnförmigen Bahnkurve 42 in Umfangsrichtung bewegbar geführt. Aus diesem Grund ist auch eine Oberseite des Probekapselkörper 20 nach außen in einem Radius gekrümmt und eine Innenseite des Deckels 30 ist korrespondierend mit gleichem Radius zur Oberseite des Probekapselkörper 20 gekrümmt. Zudem ist auch die Oberseite des Deckels 30 im gleichen Radius gekrümmt, um mit dem nachstehend noch näher erläuterten Rohrelement 60 (Außenrohr) des Probenehmers bündig abzuschließen.

Ferner ist aus Fig. 1 ersichtlich, dass der Deckel 30 durch Relativbewegung zu dem Probekapselkörper 20 über ein vorbestimmtes Ausmaß hinweg von dem Probekapselkörper 20 entkoppelt oder gelöst werden kann, d.h. die jeweiligen Vorsprünge 44 geraten außer Eingriff mit den jeweiligen Aussparungen 46₁.

Wie bereits vorstehend erwähnt, dient die Probekapsel 10, insbesondere der Probekapselkörper 20 zusammen mit dem Deckel 30, zum Einsetzen in einen erfindungsgemäßen Probenehmer 100, der beispielsweise in Fig. 2 gezeigt ist.

Im Speziellen zeigt Fig. 2 eine schematische Darstellung des erfindungsgemäßen Probenehmers 100 mit eingesetzter erfindungsgemäßer Probekapsel 10, d.h. mit eingesetztem Probekapselkörper 20 zusammen mit dem Deckel 30, von Fig. 1 in einer Schnittdarstellung.

Wie aus Fig. 2 ersichtlich ist, umfasst der Probenehmer 100 ein längliches Probekapselaufnahmeelement 50, das eine Probekapselaussparung oder Probekapselaufnahmeraum bzw. einen Einsatzaufnahmeraum 52 zum Einsetzen des vorstehend beschriebenen Probekapselkörpers 20 der Probekapsel 10 aufweist. Dabei ist der Probekapselkörper 20 in die Probekapselaussparung 52 passgenau, also unbeweglich in der Längsrichtung L und Breitenrichtung B eingesetzt, d.h. in diese Richtungen festgelegt, beispielsweise durch Formschluss festgelegt, kann aber unter bestimmten Voraussetzungen in Höhenrichtung H herausgenommen werden, was nachstehend noch näher erläutert wird.

Das längliche Probekapselaufnahmeelement 50 ist größtenteils zylindrisch ausgebildet, insbesondere in der Form eines Innenrohrs, und ist eingerichtet, den Deckel 30 zumindest in Breitenrichtung B oder Umfangsrichtung abschnittsweise zu führen, wenn der Deckel 30 relativ zu dem Probekapselkörper 20 über ein vorbestimmtes Ausmaß in der Breitenrichtung oder Umfangsrichtung bewegt wird.

Im Detail weist das längliche Probekapselaufnahmeelement 50 in Form des Innenrohrs zwei umlaufende ringförmige Aussparungen 46₂ auf, welche bei eingesetztem Probekapselkörper 20 eine Fortführung der beiden Aussparungen 46₁ in Umfangsrichtung bilden und daher fluchtend mit den Aussparungen 46₁ ausgerichtet sind. Die umlaufenden Aussparungen 46₂ des Probekapselaufnahmeelements 50 und die Aussparungen 46₁ bilden somit zwei axial beabstandete und umlaufende Kreisringe aus.

Bei eingesetztem Probekapselkörper 20 kann der Deckel 30 somit in Umfangsrichtung über den gesamten Umfang des Probekapselaufnahmeelement 50 bewegt werden.

Dabei ist allerdings anzumerken, dass für die Betriebsweise des Probenehmer 100 keine vollständig umlaufenden Kreisringe ausgebildet sein müssen, sondern entsprechend dimensionierte Kreisringsegmente ausreichend sein können.

Weiterhin umfasst der Probenehmer 100 ein hohlzylindrisches Rohrelement 60 (ein als Außenhülle fungierendes Außenrohr) mit einer abschnittsweise mit dem Deckel 30 korrespondierenden Öffnung 62.

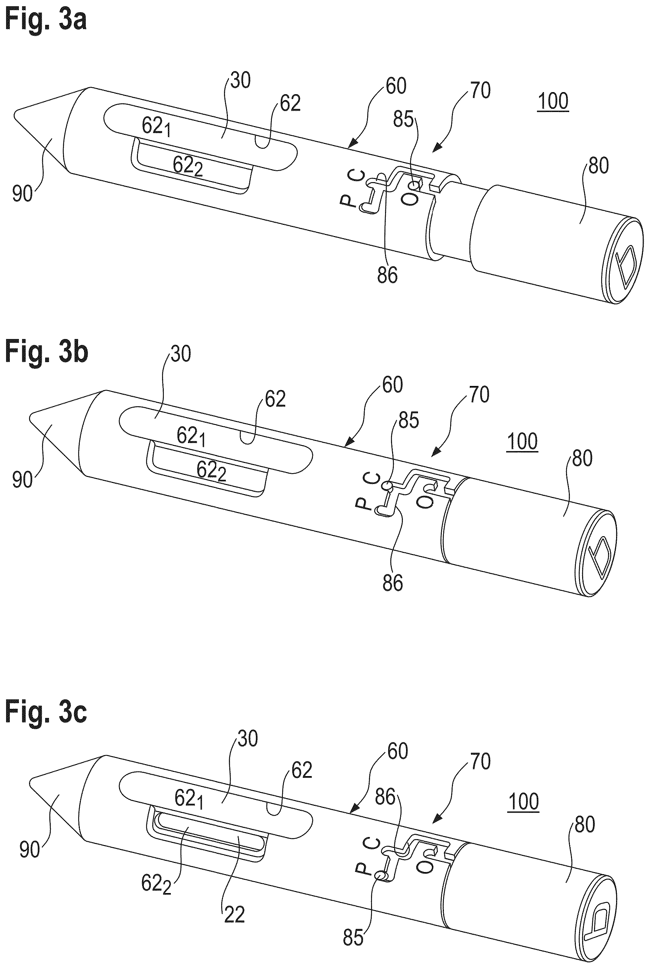

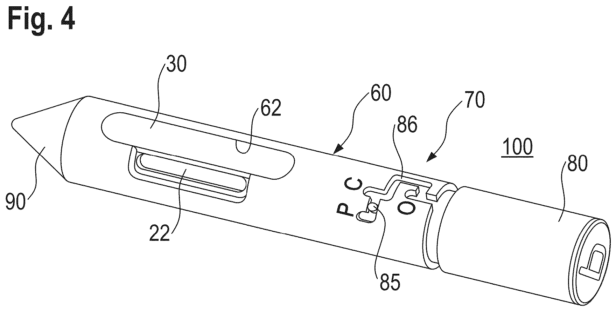

Insbesondere umfasst die Öffnung 62 einen ersten Öffnungsabschnitt 62₁, der mit dem Deckel 30 korrespondiert, d.h. Öffnungsrand und Deckelrand grenzen abschnittsweise aneinander an und sind daher passungsgleich, und weiter einen in Breitenrichtung B daran angrenzenden zweiten Öffnungsabschnitt 62₂, der mit dem Probenaufnahmeraum 22 der Probekapselkörpers 20 zumindest teilweise korrespondiert (insbesondere in den Fig. 3 und 4 erkennbar). Der erste Öffnungsabschnitt 62₁ korrespondiert mit dem Deckel 30 derart, dass der Deckel in Längsrichtung L und in Breitenrichtung B festgelegt ist, d.h. keinen Freiheitsgrad in diesen Richtungen hat. D.h. der Deckel 30 lässt sich passgenau in den ersten Öffnungsabschnitt 62₁ einsetzen.

Das Rohrelement 60 nimmt das Probekapselaufnahmeelement 50 in dessen zylindrischem Hohlraum auf und der Deckel 30 und die Öffnung 62 bzw. der erste Öffnungsabschnitt 62₁ fluchten derart, dass bei Verdrehung des Probekapselaufnahmeelements 50 innerhalb des Rohrelements 60 der Probekapselkörper 20 relativ zu dem Deckel 30 bewegt bzw. verdreht wird, um den Probenaufnahmeraum 22 des Probekapselkörpers 20 über die Öffnung freizugeben, insbesondere über den zweiten Öffnungsabschnitt 62₂ freizugeben, oder zu verschließen.

Mit anderen Worten wird der Deckel 30 bei Verdrehung des Probekapselaufnahmeelements 50 durch die Formgebung des ersten Öffnungsabschnitts 62₁ mittels Formschluss gehalten, während sich das Probekapselaufnahmeelement 50 zusammen mit dem Probekapselkörper 20 so ausrichtet, dass der Probenaufnahmeraum 22 unter dem zweiten Öffnungsabschnitt 62₂ ausgerichtet ist bzw. durch den zweiten Öffnungsabschnitt 62₂ freiliegt, um mit einer Probe befüllt zu werden. In diesem Zustand ist der Deckel 30 nicht nur über den Probekapselkörper 20, sondern auch über das Probekapselaufnahmeelement 50 geführt bzw. mit diesem in Eingriff. Der Deckel 30 wird in diesem Zustand somit von der probekapselkörperseitigen und probekapselaufnahmeelementseitigen Führungseinrichtung 40 geführt. Weiterhin weist der Probenehmer 100 eine Probenehmerspitze 90 auf, die in diesem Ausführungsbeispiel an einem Endabschnitt 61 des hohlzylindrischen Rohrelements (Außenrohr) 60 angeordnet bzw. befestigt ist (linke Seite des Probenehmer in Fig. 2), indem die Probenehmerspitze 90 mit einem Endabschnitt 51 des Probekapselaufnahmeelements (Innenrohr) 50 verschraubt ist. Die Probenehmerspitze 90 lässt den Probenehmer 100 nach außen hin in Längsrichtung L spitz zulaufen, während die Probenehmerspitze 90 nach Innen hin einen Zapfen bzw. Bolzen 91 mit Gewinde zur drehbaren Lagerung des Probekapselaufnahmeelements 50 aufweist. Insbesondere ist der Bolzen 91 mit einem in dem Endabschnitt 51 ausgebildeten Innengewinde verschraubt. Dabei bildet die Probenehmerspitze 90 einen Formschluss mit dem Rohrelement (Außenrohr) 60 bzw. liegt an dessen Endabschnitt 61 an bzw. ist auf Anschlag, und haltert das Probekapselaufnahmeelement 50 drehbar über den mit dem Probekapselaufnahmeelement 50 verschraubten Bolzen 91.

Ferner umfasst der Probenehmer 100 einen Griff 80, der mit dem Probekapselaufnahmeelement 50 drehfest verbunden ist. Dementsprechend wird eine Drehung des Griffs 80 in eine Drehung des Probekapselaufnahmeelements 50 umgesetzt bzw. übersetzt. Allerdings ist der Griff 80 über einen Mechanismus wie unter anderem einen Verriegelungsmechanismus relativ in Längsrichtung L zu dem Probekapselaufnahmeelement 50 bewegbar.

Die konkrete Umsetzung des Mechanismus wird nachfolgend ausführlicher beschrieben:
Der Griff 80 ist hülsenartig und optional mit einer stirnseitigen Verschlusskappe K (rechtes Ende des Probenehmers 100 in Fig. 2) ausgebildet. Starr mit dem Griff 80 verbunden ist ein hülsenartig ausgebildetes Übertragungselement 81, indem das Übertragungselement 81 in dem hülsenartig ausgebildeten Griff 80 teilweise aufgenommen bzw. teilweise kraftschlüssig eingesetzt ist. Das Übertragungselement 81 dreht bei Verdrehung des Griffs 80 daher mit diesem mit.

Weiterhin sind das Übertragungselement 81 sowie der Griff 80 in Längsrichtung L relativ beweglich zu dem Probekapselaufnahmeelement 50 geführt, d.h. das Probekapselaufnahmeelement 50 lagert das Übertragungselement 81 relativ in Längsrichtung L beweglich mittels einer Gleitlagerung GL. Diese Gleitlagerung GL wird dadurch realisiert, dass das Übertragungselement 81 an der Seite des Probekapselaufnahmeelements 50 die Form eines Hohlzylinders hat, welcher gleitend auf einem korrespondierenden Wellenabschnitt 53 des Probekapselaufnahmeelements 50 gelagert ist.

Das Übertragungselement 81 nimmt weiterhin ein Bolzenelement (Führungsstange) 82 auf, das starr mit dem Probekapselaufnahmeelement 50 verbunden ist, beispielsweise durch eine mechanische Befestigung oder eine Presspassung.

Das Bolzenelement 82 und das Übertragungselement 81 sind drehfest, aber in Längsrichtung L relativ zueinander bewegbar gekoppelt. Eine nur schematisch dargestellte Feder F spannt das Übertragungselement 81 in Richtung des Probekapselaufnahmeelements 50 vor, indem sich die Feder F beispielsweise an einem Absatz 83 des Bolzenelements 82 abstützt und gegen einen Absatz 84 des Übertragungselements 81 drückt, wie insbesondere Fig. 2 entnommen werden kann.

Die drehfeste Verbindung zwischen dem Bolzenelement 82 und Übertragungselement 81 wird beispielsweise dadurch bewerkstelligt, dass der Absatz 83 formschlüssig in Umfangsrichtung, nicht aber in Längsrichtung L, in dem hülsenartigen Griff 80 gehalten wird . Beispielsweise kann der Griff 80 innenseitig nicht kreisrund ausgestattet sein, sondern zusätzlich innenseitige Einkerbungen aufweisen, in die Überstände des ansonsten kreisrund ausgebildeten Absatzes 83 eingreifen. Dementsprechend lässt sich der Absatz 83 und damit das Bolzenelement 82 in Längsrichtung L relativ zum Griff 80 bewegen, aber nicht relativ zu dem Griff 80 verdrehen.

Anhand dieser Anordnung bzw. Mechanismus kann der Griff 80 relativ zu dem Probekapselaufnahmeelement 50 in Längsrichtung L wegbewegt werden, wenn die Probenehmerspitze 90 mit dem Probekapselaufnahmeelement 50 verschraubt ist, wobei dabei die Feder F zusammengedrückt wird; dies deshalb, da sich der Griff 80 zusammen mit dem Übertragungselement 81 relativ zu dem Bolzenelement 82 und dem Probekapselaufnahmeelement 50 in Längsrichtung L weg von der Probenehmerspitze 90 bewegt.

Zur einfachen Montage des Probenehmer kann der Absatz 83 auch ein separates Element hinsichtlich des Bolzenelements 82 sein; beispielsweise als Bolzenkopf ausgeführt sein, der mit dem Bolzenelement 82 verschraubt ist, wie in Fig. 2 veranschaulicht ist. Dadurch lässt sich eine sehr leichte Montage des Probenehmers 100 realisieren.

Die unterschiedlichen Stellungen des Probekapselaufnahmeelements 50 in Bezug auf das Rohrelement 60 werden nachfolgend näher erläutert.

Fig. 3a-c zeigen schematische Darstellungen des erfindungsgemäßen Probenehmers 100 in unterschiedlichen Stellungen in jeweiligen perspektivischen Ansichten. Wie den Figuren 3a-c entnommen werden kann, ist das Probekapselaufnahmeelement 50 in Bezug auf das Rohrelement 60 anhand einer nachstehend noch näher beschriebenen Zwangsführung 70 in drei unterschiedliche Stellungen ("P" für die Probenentnahmestellung, "C" für die Schließstellung und "O" für die Probekapselentnahmestellung) überführbar.

So können das Probekapselaufnahmeelement 50 und das Rohrelement 60 derart relativ zueinander bewegt werden, dass in einer ersten Stellung entsprechend der gekennzeichneten Stellung "C" der Deckel 30 den Probenaufnahmeraum 22 des Probekapselkörpers 20 verschließt. Insbesondere ist der Probenaufnahmeraum 22 durch den in dem ersten Öffnungsabschnitt 62₁ befindlichen Deckel 30 verschlossen, während der zweite Öffnungsabschnitt 62₂ durch einen Verschlussabschnitt des Probekapselaufnahmeelements 50 verschlossen ist (Fig. 3b).

Weiterhin können das Probekapselaufnahmeelement 50 und das Rohrelement 60 derart relativ zueinander bewegt werden, dass in einer zweiten Stellung entsprechend der gekennzeichneten Stellung "P" der Probenaufnahmeraum 22 des Probekapselkörpers 20 über den zweiten Öffnungsabschnitt 62₂ freigegeben ist bzw. freiliegt, während der Deckel 30 in dem ersten Öffnungsabschnitt 62₁ aufgrund des Formschlusses gehalten wird und diesen verschließt (Fig. 3c).

Darüber hinaus können das Probekapselaufnahmeelement 50 und das Rohrelement 60 derart relativ zueinander bewegt werden, dass in einer dritten Stellung entsprechend der gekennzeichneten Stellung "O" der Deckel 30 von dem Probekapselaufnahmeelement 50 außer Eingriff gebracht ist, so dass der Probekapselkörper 20 zusammen mit dem Deckel 30 über den ersten Öffnungsabschnitt 62₁ von dem Probenehmer 100 entnehmbar sind (Fig. 3a).

Wie bereits erwähnt wird das Verfahren zwischen der ersten, zweiten und dritten Stellung mittels einer Zwangsführung 70, beispielsweise als eines Verriegelungsmechanismus, vorgegeben. Beispielweise kann das Übertragungselement 81 einen Steuervorsprung 85 aufweisen, der innerhalb eine in dem Rohrelement 60 vorgegebenen Steuerbahn 86 verfahrbar ist, um das Probekapselaufnahmeelement 50 und das Rohrelement 60 so relativ zueinander zu bewegen, dass die erste, zweite und dritte Stellung erreicht werden kann.

Der Betrieb des Probenehmers 100 bzw. die Probenentnahme gestaltet sich demzufolge nach dem folgenden erfindungsgemäßen Probeentnahmeverfahren:
Zunächst befindet sich der Probenehmer in dessen dritter Stellung ("O"), bei der der Probekapselkörper 20 in die Probekapselaussparung 52 des Probekapselaufnahmeelements 50 eingesetzt ist (Fig. 3a). In diesem Zustand befindet sich der Deckel 30 nur mit dem Probekapselköper 20 über die (probekapselköperseitige) Führungseinrichtung 40 im Eingriff.

Der Probenehmer 100 wird dann durch Bewegen des Probekapselaufnahmeelements 50 relativ zu dem Rohrelement 60 von der Stellung "O" über die Steuerbahn der Zwangsführung 70 (ausgebildet durch eine herkömmliche Steuerbahn 86 in dem Rohrelement 60 und den Vorsprung 85 an dem Übertragungselement 81) in die erste Stellung entsprechend der gekennzeichneten Stellung "C" versetzt, so dass der Deckel 30 den Probenaufnahmeraum 22 des Probekapselkörpers 20 verschließt und gleichzeitig das Probekapselaufnahmeelement 50 mit dem Deckel in Eingriff gebracht wird, so dass eine Entnahme des Probekapselkörpers 20 zusammen mit dem Deckel 30 blockiert wird (Fig. 3b). Dementsprechend kann der Probenehmer 100 in die Probengesamtmenge eingeführt werden.

Anschließend wird, ausgehend von der ersten Stellung entsprechend der gekennzeichneten Stellung "C", durch relatives Drehen des Probekapselaufnahmeelements 50 gegenüber dem Rohrelement 60 die zweite Stellung entsprechend der gekennzeichneten Stellung "P" herbeigeführt, wie dies durch den Übergang in Fig. 4 veranschaulicht, so dass der Probenaufnahmeraum 22 des Probekapselkörpers 20 über den zweiten Öffnungsabschnitt 62₂ freigegeben ist, während der Deckel 30 in dem ersten Öffnungsabschnitt 62₁ gehalten wird und diesen verschließt. Die Probe kann somit entnommen werden. Dabei wird der Deckel 30 auch durch die probekapselaufnahmeelementseitige Führungseinrichtung 40 gehalten.

Darauffolgend kann durch entsprechendes relatives Drehen des Probekapselaufnahmeelements 50 gegenüber dem Rohrelement 60 der Probenehmer 100 wieder in die erste Stellung versetzt werden, so dass Probenaufnahmeraum 22 durch den Deckel 30 in dem ersten Öffnungsabschnitt 62₁ wieder verschlossen ist. Demenentsprechend wird der Probenehmer 100 anschließend aus der Probengesamtmenge herausgeführt.

Schließlich kann durch relatives Drehen des Probekapselaufnahmeelements 50 gegenüber dem Rohrelement 60 in die dritte Stellung der Deckel 30 von dem Probekapselaufnahmeelement 50 außer Eingriff gebracht werden, wodurch die Entnahme des Probekapselkörpers 20 zusammen mit dem Deckel 30 über den ersten Öffnungsabschnitt 62₁ von dem Probenehmer 100 ermöglicht wird. Der Probekapselkörper 20 kann nun in einem gesonderten Behältnis transportiert werden.

Nach der Probenentnahme und entnommenen Probekapselkörper 20 kann der erfindungsgemäße Probenehmer beispielsweise zur Reinigung demontiert werden, indem Probenehmerspitze 90 von dem Probekapselaufnahmeelement (Innenrohr) 50 gelöst bzw. abgeschraubt wird. Dementsprechend kann der Griff 80 von der dritten ("O") über die Zwangsführung 70 axial von dem hohlzylindrischen Rohrelement 60 (Außenrohr) wegbewegt werden, so dass das Probekapselaufnahmeelement 50 aus dem Rohrelement 60 (Außenrohr) herausgezogen wird. Eine Reinigung ist nun ohne weiters möglich.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Probekapsel (10) für einen Probenehmer (100), wobei die Probekapsel (10) eingerichtet ist, eine Probe, insbesondere eine flüssige, pulverförmige oder granulatförmige Probe, aufzunehmen, wobei die Probekapsel (10) aufweist
einen Probekapselkörper (20) mit einem Probenaufnahmeraum (22) zur Aufnahme der Probe, wobei sich der Probenaufnahmeraum (22) in eine Längsrichtung (L) der Probekapsel (10) und eine Breitenrichtung (B) der Probekapsel (10) erstreckt, und
einen Deckel (30), der mit dem Probekapselkörper (20) derart verbunden ist, dass der Deckel (30) in der Breitenrichtung (B) relativ zu dem Probekapselkörper (20) zum Freigeben und/oder Verschließen des Probeaufnahmeraums (22) bewegbar ist.

2. Probekapsel (10) nach Anspruch 1, wobei der Deckel (30) mittels einer Führungseinrichtung (40) mit dem Probekapselkörper (20) verbunden ist,
wobei die Führungseinrichtung (40) eingerichtet ist, den Deckel (30) in der Breitenrichtung (B) relativ zu dem Probekapselkörper (20) bewegbar zu führen, während eine Bewegung des Deckels (30) in der Längsrichtung (L) relativ zu dem Probekapselkörper (20) unterbunden wird.

3. Probekapsel (10) nach Anspruch 2, wobei die Führungseinrichtung (40) eingerichtet ist, den Deckel (30) in der Breitenrichtung (B) relativ zu dem Probekapselkörper (20) auf einer Bahnkurve (42) bewegbar oder schwenkbar zu führen.

4. Probekapsel (10) nach Anspruch 3, wobei die Bahnkurve (42) zumindest abschnittsweise eine Kreisbahn beschreibt.

5. Probekapsel (10) nach einem der Ansprüche 1 bis 4, wobei der Deckel (30) an dessen dem Probeaufnahmeraum (22) zugewandten Innenseite zumindest einen Vorsprung (44) aufweist und der Probekapselkörper (20) zumindest eine der Innenseite des Deckels (30) zugewandte Aussparung (46₁) aufweist, wobei der zumindest eine Vorsprung (44) in der zumindest einen Aussparung (46₁) so gleitend geführt ist, dass der Deckel (30) in Bezug auf den Probekapselkörper (20) in der Breitenrichtung (B) verschwenkbar gelagert ist.

6. Probekapsel (10) gemäß einem der Ansprüche 1 bis 5, wobei der Deckel (30) durch Relativbewegung zu dem Probekapselkörper (20) über ein vorbestimmtes Ausmaß hinweg von dem Probekapselkörper (20) entkoppelt oder gelöst werden kann.

7. Probenehmer (100) zur Entnahme einer Probe, vorzugsweise einer flüssigen, pulverförmigen oder granulatförmigen Probe, wobei der Probenehmer (100) aufweist
ein längliches Probekapselaufnahmeelement (50), das eine Probekapselaussparung (52) zum Einsetzen eines Probekapselkörpers (20) einer Probekapsel (10) gemäß einem der Ansprüche 1 bis 5 aufweist,
wobei der Probekapselkörper (20) in die Probekapselaussparung (52) unbeweglich eingesetzt ist,
wobei das Probekapselaufnahmeelement (50) eingerichtet ist, den Deckel (30) zumindest in Breitenrichtung oder Umfangsrichtung abschnittsweise zu führen, wenn der Deckel (30) hinweg relativ zu dem Probekapselkörper (20) über ein vorbestimmtes Ausmaß in der Breitenrichtung oder Umfangsrichtung bewegt wird.

8. Probenehmer (100) nach Anspruch 6, wobei der Probenehmer (100) weiterhin ein hohlzylindrisches Rohrelement (60) mit einer zumindest mit dem Deckel (30) korrespondierenden Öffnung (62) aufweist,
wobei das Rohrelement (60) das Probekapselaufnahmeelement (50) in dessen zylindrischem Hohlraum aufnimmt und der Deckel (30) und die Öffnung (62) derart fluchten, dass bei Verdrehung des Probekapselaufnahmeelements (50) innerhalb des Rohrelements (60) der Probekapselkörper (20) relativ zu dem Deckel (30) bewegt wird, um den Probenaufnahmeraum des Probekapselkörpers (20) über die Öffnung freizugeben und/oder zu verschließen.

9. Probenehmer (100) nach Anspruch 6 oder 7, wobei die Öffnung (62) einen ersten Öffnungsabschnitt (62₁), der mit dem Deckel (30) korrespondiert, und einen in Breitenrichtung (B) daran angrenzenden zweiten Öffnungsabschnitt (62₂), der mit dem Probenaufnahmeraum (22) der Probekapselkörpers (20) zumindest teilweise korrespondiert, aufweist.

10. Probenehmer (100) nach einem der Ansprüche 6 bis 8, wobei das Probekapselaufnahmeelement (50) und das Rohrelement (60) derart relativ zueinander bewegt werden können, dass in einer ersten Stellung der Deckel (30) den Probenaufnahmeraum (22) des Probekapselkörpers (20) verschließt und/oder in einer zweiten Stellung der Probenaufnahmeraum (22) des Probekapselkörpers (20) über den zweiten Öffnungsabschnitt (62₂) freigegeben ist, während der Deckel (30) in dem ersten Öffnungsabschnitt (621) gehalten wird und diesen verschließt, und/oder in einer dritten Stellung der Deckel (30) von dem Probekapselaufnahmeelement (50) außer Eingriff gebracht ist, so dass der Probekapselkörper (20) zusammen mit dem Deckel (30) über den ersten Öffnungsabschnitt (62₁) von dem Probenehmer (100) entnehmbar sind.

11. Probeentnahmeverfahren zur Entnahme einer Probe, insbesondere einer flüssigen, pulverförmigen oder granulatförmigen Probe, aus einer Probengesamtmenge unter Verwendung eines Probenehmers (100) gemäß einem der Ansprüche 6 bis 10, wobei das Verfahren die folgenden Schritte aufweist:
Einführen des Probenehmers (100) in die Probengesamtmenge bei durch den Deckel (30) geschlossenen Probeaufnahmeraum (22) des in dem Probekapselaufnahmeelement (50) eingesetzten Probekapselkörpers (20);
relatives Drehen des Probekapselaufnahmeelements (50) gegenüber dem Rohrelement (60) derart, dass der Probenaufnahmeraum (22) des Probekapselkörpers (20) über den zweiten Öffnungsabschnitt (62₂) freigegeben ist, während der Deckel (30) in dem ersten Öffnungsabschnitt (62₁) gehalten wird und diesen verschließt,
Entnahme der Probe;
relatives Drehen des Probekapselaufnahmeelements (50) gegenüber dem Rohrelement (60) derart, dass Probenaufnahmeraum (22) durch den Deckel (30) in dem ersten Öffnungsabschnitt (62₁) wieder verschlossen ist und Herausführen des Probenehmers (100) aus der Probengesamtmenge;
relatives Drehen des Probekapselaufnahmeelements (50) gegenüber dem Rohrelement (60) derart, dass der Deckel (30) von dem Probekapselaufnahmeelement (50) außer Eingriff gebracht wird und Entnahme des Probekapselkörpers (20) zusammen mit dem Deckel (30) über den ersten Öffnungsabschnitt (62₁) von dem Probenehmer (100).
